Europäisches Patentamt

European Patent Office

Office européen des brevets

(11) Numéro de publication: **0 374 018 B1**

(12) **FASCICULE DE BREVET EUROPEEN**

(45) Date de publication de fascicule du brevet: **18.11.93**  (51) Int. Cl.⁵: **H04B 5/00**, E05B 49/00, G06K 7/08

(21) Numéro de dépôt: **89403398.4**

(22) Date de dépôt: **07.12.89**

---

(54) **Dispositif pour l'échange d'informations à distance entre un objet portatif et une station.**

---

(30) Priorité: **16.12.88 FR 8816672**

(43) Date de publication de la demande:
**20.06.90 Bulletin 90/25**

(45) Mention de la délivrance du brevet:
**18.11.93 Bulletin 93/46**

(84) Etats contractants désignés:
**AT BE CH DE ES GB IT LI NL SE**

(56) Documents cités:
**EP-A- 0 289 136**
**EP-A- 0 309 201**
**DE-A- 3 707 173**

(73) Titulaire: **FRANCE TELECOM**
**6, Place d'Alleray**
**F-75015 Paris(FR)**

(72) Inventeur: **Levionnais, Philippe**
**23, rue du Clos Beaumois**
**F-14000 Caen(FR)**

(74) Mandataire: **Plaçais, Jean-Yves et al**
**Cabinet Netter,**
**40, rue Vignon**
**F-75009 Paris (FR)**

---

## Description

L'invention concerne l'échange d'informations à distance entre un objet portatif et une station. Elle s'applique particulièrement mais non limitativement à l'échange d'informations entre une carte électronique à mémoire, communément appelée "carte à puce", et un terminal.

La notion d'échange à "distance" s'oppose ici à celle d'un échange nécessitant une interface par contact, électrique ou de nature différente, entre la carte et le terminal, comme c'est le cas par exemple dans les publiphones à télécartes.

Ce type d'interface peut être considéré comme assez contraignant dans un certain nombre d'applications telles que l'identification de personnes ou le contrôle d'accès de personnes dans un bâtiment. Il peut être également contraignant dans le cas de transactions bancaires nécessitant le passage de la carte dans une fente du terminal.

C'est pourquoi le Demandeur vise à proposer un dispositif d'échange de données à distance, cette dernière pouvant être d'importance différente.

L'homme de l'art sait que l'on peut faire varier l'amplitude d'un signal électromagnétique aux bornes d'un cadre inductif en le couplant inductivement avec un circuit résonant accordé sur la fréquence de ce signal. De telles variations sont significatives lorsque le rapport des surfaces des éléments inductifs du circuit résonant et du cadre n'est pas trop important (EP-A-0 309 201, appartenant à l'état de la technique selon l'Article 54(3) de la Convention sur le Brevet Européen).

Cependant, il est envisagé, notamment dans le cas de transactions bancaires à distance, que le porteur d'une carte à mémoire, équipée d'un circuit résonant, passe à l'intérieur d'un portique inductif, et que l'échange des informations se fasse pendant ce passage. Or le rapport de la surface d'un tel portique (environ 1,6m$^2$) à celle d'une carte à mémoire standard (environ 40cm$^2$) conduirait à des variations d'amplitude trop faibles pour être significatives de la présence d'une carte dans le portique et pourrait éventuellement être interprétées comme du "bruit". De plus, ces variations dépendent des caractéristiques physiques (volume par exemple) de la personne présente dans le portique, ce qui leur confère une stabilité insuffisante pour assurer la fiabilité requise dans les informations échangées lors de transactions bancaires par exemple.

L'invention vise à apporter une solution à ce problème.

Un but de l'invention est de provoquer une variation d'un signal électromagnétique aux bornes d'un cadre inductif, lors d'un couplage inductif à distance avec un objet portatif telle qu'une carte à mémoire, qui soit significative de la présence de cette carte dans le portique.

L'invention a encore pour but de s'affranchir des variations parasites dues notamment aux caractéristiques physiques des personnes munies d'une telle carte à mémoire.

L'invention a encore pour but d'assurer une bonne fiabilité des informations transmises entre l'objet portatif et la station.

Un autre but important de l'invention est de permettre un échange bidirectionnel à distance entre l'objet portatif et la station.

Elle vise également à réaliser un dispositif ayant une consommation quasi nulle aussi bien en émission qu'en réception d'informations, et ce à moindre coût.

L'invention a donc pour objet un dispositif pour l'échange d'informations à distance entre un objet portatif et une station, caractérisé en ce qu'il comprend :
- sur la station,
  . un oscillateur comportant des moyens amplificateurs et une boucle de réaction à circuit oscillant, possédant deux éléments capacitifs-station et un élément inductif-station, et susceptible de lui conférer une fréquence de travail variable relativement à une fréquence de repos, ainsi que
  . des moyens de traitement-station, reliés à l'oscillateur, et capables de traiter les variations de la fréquence de travail,
- sur l'objet portatif,
  . un circuit électronique commutable entre un état inactif et un état actif dans lequel il forme un circuit résonant accordé sur une fréquence distincte de ladite fréquence de repos, tout en demeurant apte au couplage inductif avec la boucle de réaction (1) à ladite fréquence de repos, et
  . des moyens de traitement-objet, capables de commuter le circuit électronique en fonction d'informations à transmettre vers la station,

la variation de la fréquence de travail de l'oscillateur, ainsi induite par ces commutations, permettant aux moyens de traitement-station d'en déduire lesdites informations et les éléments du circuit électronique et ceux de la boucle de réaction étant choisis et agencés pour que la variation de fréquence induite par le circuit résonant soit supérieure à un seuil prédéterminé.

L'invention a aussi pour objet une telle station et un tel dispositif.

Il est remarquable de constater ici qu'un principe de l'invention repose sur une utilisation inhabituelle d'un oscillateur. En effet, l'homme de l'art sait que les oscillateurs sont habituellement employés et réglés pour délivrer un signal ayant une fréquence aussi stable que possible. Par contre, dans la présente invention, ainsi que cela sera expliqué en détail ci-après, on choisit un oscillateur possédant une boucle de réaction dont la modification d'un des paramètres conduit à une variation de la fréquence du signal produit par l'oscillateur. C'est cette variation de fréquence qui sera utilisée pour la transmission d'informations depuis l'objet portatif vers la station.

L'oscillateur comprend avantageusement des moyens amplificateurs et une boucle de réaction à circuit oscillant possédant par exemple, outre l'élément inductif-station, deux éléments capacitifs-station.

On peut ainsi utiliser, dans un mode de réalisation particulièrement avantageux, un oscillateur dit de "Colpits aménagé", dans lequel la pulsation de travail de l'oscillateur est sensiblement égale à l'inverse de la racine carrée du produit de la valeur de l'élément inductif-station et d'une valeur capacitive globale sensiblement égale au rapport du produit des valeurs des deux éléments capacitifs-station sur leur somme ; ces valeurs respectives des deux éléments capacitifs-station sont alors avantageusement choisies pour maximiser la variation de fréquence induite dans l'oscillateur par la commutation du circuit électronique et sont de préférence sensiblement égales au double de ladite valeur capacitive globale.

Il est avantageux que la résistance d'entrée des moyens amplificateurs de l'oscillateur soit faible. On peut alors utiliser des moyens amplificateurs de l'oscillateur comprenant un transistor monté en base commune.

Dans un mode de réalisation, le circuit électronique de l'objet portatif comporte un élément inductif-objet et un élément capacitif-objet, reliés l'un à l'autre dans ledit état actif pour former le circuit résonant, ainsi que des moyens de commutation , en particulier un transistor à effet de champ, reliés à l'un et/ou à l'autre des deux éléments et susceptibles de commuter le circuit électronique entre ces deux états.

Généralement, l'élément inductif-station et l'élément inductif-objet possèdent chacun une valeur résistive ; dans l'état actif du circuit électronique, le circuit résonant induit alors dans la boucle de réaction un terme résistif additionnel dépendant du coefficient de mutuelle induction entre l'élément inductif-station et l'élément inductif-objet ainsi que de la valeur résistive de cet élément inductif-objet ; il convient alors avantageusement que le rapport de la valeur du terme résistif additionnel sur la valeur résistive de l'élément inductif-station soit supérieur à une valeur choisie, par exemple de l'ordre de 50.

Il est également avantageux que l'élément inductif-objet soit agencé pour conférer une faible capacité parasite au circuit résonant. Dans le cas où l'objet portatif est du type carte ou analogue, l'élément inductif-objet peut alors comprendre un conducteur électrique traversant la carte pour former une succession de spires alternativement situées sur le recto et le verso de la carte.

Selon une autre caractéristique de l'invention,afin d'assurer la bidirectionnalité de l'échange, l'objet portatif peut comprendre des moyens de réception d'informations transmises depuis la station vers l'objet portatif, commutables en fonction de ces informations transmises, entre un état de travail dans lequel ils sont couplés inductivement avec la boucle de réaction de l'oscillateur, et un état de repos, ainsi que des moyens d'analyse déduisant de ces commutations lesdites informations transmises. Il convient alors, que l'objet portatif comprenne également des moyens d'alimentation électrique.

Dans un mode de réalisation particulièrement avantageux, les moyens de réception comprennent ledit circuit résonant et des moyens de commutation additionnels, tel qu'un transistor à effet de champ, commandé par le circuit résonant pour délivrer aux moyens d'analyse une donnée binaire en fonction de l'état dans lequel se trouvent les moyens de réception.

L'invention a également pour objet une station et un objet portatif d'un tel dispositif.

D'autres avantages et caractéristiques de l'invention apparaîtront à la lecture de la description détaillée ci-après et des dessins ci-annexés sur lesquels :

- la figure 1 représente très schématiquement un mode de réalisation d'une station d'un dispositif selon l'invention,
- la figure 2 représente un synoptique schématique d'un oscillateur appartenant à une station selon l'invention,
- la figure 3 est un synoptique schématique d'un mode de réalisation d'un objet portatif selon l'invention,
- la figure 4 illustre schématiquement un mode de réalisation particulier de l'objet portatif de la figure 3,
- les figures 5 et 6 illustrent deux modes d'implantation d'un élément inductif-objet sur un objet portatif,
- la figure 7 illustre un mode d'implantation d'un élément inductif-objet sur le recto et le verso d'une carte, correspondant à la figure 6,
- la figure 8 est un schéma équivalent de l'oscillateur de la figure 2, et

- la figure 9 est une courbe expérimentale confirmant le choix de certains composants de l'oscillateur de la station selon l'invention.

Les dessins comportent pour l'essentiel des éléments de caractère certain. A ce titre, ils font partie intégrante de la description et pourront non seulement servir à mieux faire comprendre la description ci-après, mais aussi à contribuer, le cas échéant, à la définition de l'invention.

On considérera maintenant, et sauf mention contraire, que l'objet portatif est du type carte à mémoire et que la station est un terminal équipé d'un portique inductif dans lequel est susceptible de passer une personne munie de la carte à mémoire. Bien entendu, ainsi que mentionné ci-avant, cette application particulière de l'invention n'est aucunement limitative.

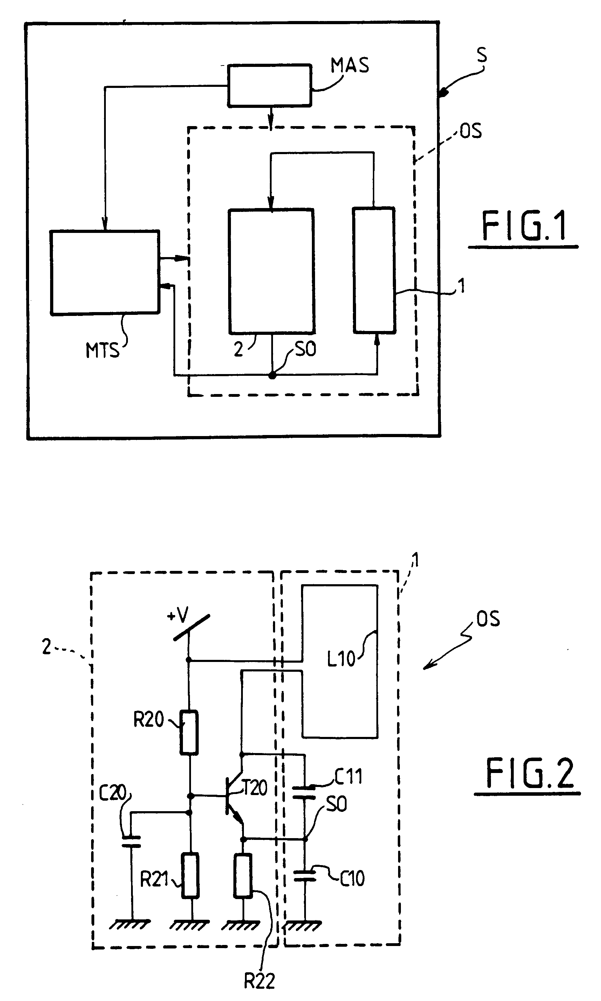

Ainsi que le montre la figure 1, le terminal S comprend un oscillateur OS composé de moyens amplificateurs 2 et d'une boucle de réaction 1 reliant la sortie SO de ces moyens amplificateurs à leur entrée. Ainsi qu'il sera expliqué ci-après, l'agencement et le choix des composants de la boucle de réaction 1 confèrent à cet oscillateur une fréquence de travail variable dont les variations sont traitées par des moyens de traitement station MTS reliés à la sortie SO des moyens amplificateurs 2. L'ensemble de ces constituants du terminal S est alimenté par des moyens d'alimentation station MAS.

L'homme de l'art reconnaît sur la figure 2, que l'oscillateur OS possède une structure générale du type "Colpits" telle qu'elle peut être décrite dans le document de Jean AUVRAY "ELECTRONIQUE DES SIGNAUX ANALOGIQUES" pages 273-276 DUNOD UNIVERSITE.

Les moyens amplificateurs 2 comprennent un transistor T20 monté en base commune. Ce transistor est par exemple celui commercialisé par la société française RTC sous la référence 2N2222A. L'émetteur de ce transistor est relié à la masse par une résistance de polarisation R22 et sa base est reliée, d'une part à la tension +V, délivrée par les moyens d'alimentation MAS, par l'intermédiaire d'une résistance de polarisation R20 et, d'autre part, à la masse par l'intermédiaire d'une résistance R21 et d'un condensateur C20 disposé aux bornes de la résistance R21.

La boucle de réaction 1 comporte un élément inductif-station L10 et deux condensateurs C10 et C11, ces trois éléments formant un circuit oscillant. L'élément inductif L10 est formé par le portique à l'intérieur duquel est susceptible de passer la personne munie de sa carte et constitue une spire rectangulaire dont une borne est reliée à la tension +V et dont l'autre borne est reliée au collecteur du transistor T20. Les dimensions du cadre inductif L10 sont celles d'une porte standard c'est-à-dire environ 2m pour la hauteur et 80cm pour la largeur. Le porteur de la carte peut ainsi garder celle-ci sur lui sans la tenir obligatoirement à la main. La spire ainsi constituée présente une valeur inductive de 6,7 micro-Henry et une valeur résistive R10 égale à environ 0,1 Ohm.

L'un des deux condensateurs est monté entre l'émetteur et le collecteur du transistor T20. Il porte la référence C11 et présente une valeur capacitive égale à environ 56 picofarads.

Le deuxième condensateur est monté entre l'émetteur du transistor T20 et la masse aux bornes de la résistance R22. Il porte la référence C10 et a une valeur capacitive sensiblement égale à 150 picofarads.

Cependant le transistor T20 présente des capacités parasites propres. Aussi convient-il de définir un premier élément capacitif-station, portant également la référence C11, qui soit représentatif de la valeur capacitive totale entre l'émetteur et le collecteur du transistor T20, et un deuxième élément capacitif-station, portant la référence C10, qui soit représentatif de la valeur capacitive totale entre l'émetteur et la masse.

Les valeurs des deux condensateurs ont été choisies pour que la valeur capacitive de chaque élément capacitif-station soit égale à environ 176 picofarads.

Lorsque le cadre L10 n'est pas inductivement couplé avec la carte à mémoire, l'oscillateur produit un signal à une fréquence de repos $F_0$.

Le choix des valeurs capacitives des deux éléments capacitifs-station C10 et C11 va contribuer à obtenir une variation significative de fréquence du signal produit par l'oscillateur lorsque le cadre L10 sera en couplage inductif avec la carte à mémoire. Bien que l'oscillateur présente une structure générale dite de "Colpits", on le désignera cependant sous le terme dit de "Colpits aménagé" pour évoquer cette propriété particulière et inhabituelle dans le fonctionnement d'un oscillateur classique.

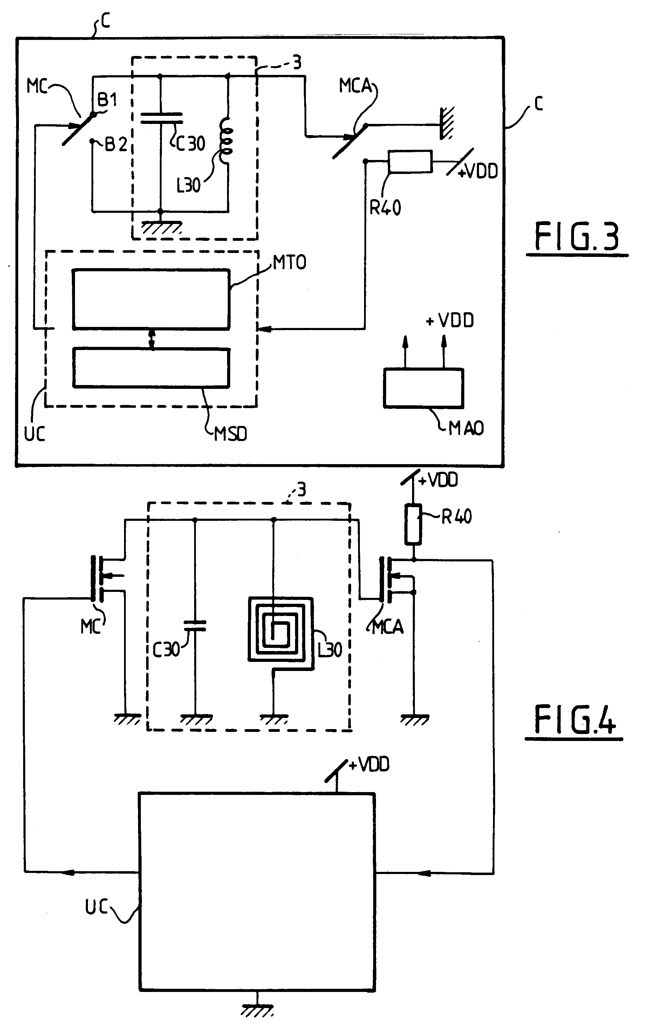

Comme illustré sur la figure 3, une carte C selon l'invention, du type carte à mémoire standard, c'est-à-dire d'un format d'environ 85mm sur 55mm , comporte un circuit électronique 3 possédant un élément inductif-objet L30 ayant une valeur inductive sensiblement égale à 6,7 micro-Henry et une valeur résistive R30 sensiblement égale à 0,5 Ohm. Cet élément inductif L30 est destiné à être placé en couplage inductif avec l'élément inductif-station L10 lors du passage du porteur de la carte dans le portique. On peut alors définir un coefficient de mutuelle induction M entre ces deux éléments inductifs et dont la valeur est sensiblement égale à $4,3410^{-8}$ Henry, lorsque la carte est placée au centre du portique. Cette valeur va en augmentant lorsque la carte est rapprochée d'un des montants du portique.

Aux bornes de cet élément inductif L30 est placé un élément capacitif-objet C30 dont la valeur capacitive est choisie pour former avec cet élément inductif L30 un circuit résonant accordé sur une fréquence $F_R$ distincte de la fréquence de repos de l'oscillateur du terminal.

La différence entre les valeurs de cette fréquence d'accord et de la fréquence de repos est par exemple la variation de fréquence induite par le circuit résonant dans le cas le plus défavorable, c'est-à-dire lorsque la carte est placée au centre du portique.

Cependant ce circuit résonant demeure toujours apte au couplage inductif avec la boucle de réaction à ladite fréquence de repos.

La sensibilité des moyens de traitement-station MTS impose un seuil au-delà duquel doit se situer cette variation de fréquence pour pouvoir être analysée par ces moyens MTS. Dans cette application le seuil est fixé à 50 KHz mais peut être plus faible si la sensibilité des moyens de traitement MTS le permet, et les éléments du circuit électronique 3 et ceux de la boucle de réaction sont choisis et agencés que cette variation de fréquence se situe au-dessus de ce seuil prédéterminé.

Le circuit électronique 3 est commutable entre deux états par l'intermédiaire de moyens de commutation MC, représentés ici schématiquement par un interrupteur, susceptibles de court-circuiter les deux bornes B1 et B2 de l'élément capacitif C30 (ou de l'élément inductif L30). Ainsi, on définit un état actif dans lequel, l'interrupteur MC étant ouvert, le circuit électronique 3 forme un circuit résonant, et un état inactif dans lequel, l'interrupteur MC étant fermé, les bornes respectives des éléments capacitif C30 et inductif L30 sont court-circuitées et reliées à la masse.

Ces moyens de commutation MC sont commandés par des moyens de traitement-objet MTO reliés à des moyens de stockage d'informations MSD. Ces moyens MTO et MSD font partie d'une unité centrale qui, dans le cas particulier d'une carte mémoire, comprend le microcontrôleur de cette carte ainsi que ses mémoires implicitement associées.

Une entrée des moyens de traitement-objet est susceptible d'être reliée soit à la masse, soit à une tension prédéterminée +VDD délivrée par des moyens d'alimentation-objet MAO. Le choix de cette liaison dépend de moyens de commutation additionnels MCA commandés par le circuit résonant de la carte C, c'est-à-dire le circuit électronique 3 dans son état actif.

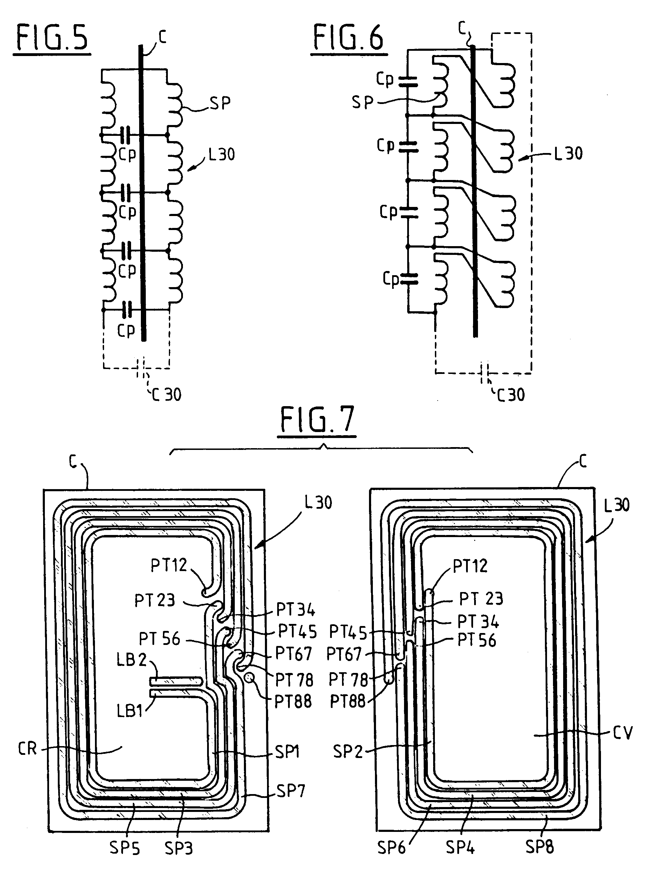

Ces différents moyens de commutation peuvent être réalisés à l'aide de transistors à effet de champ comme le montre la figure 4. Le transistor MC est du type à grille isolée canal N (MOS canal N) et plus particulièrement à déplétion. Sa grille est reliée à l'unité centrale UC ; le drain est relié à la borne de l'élément capacitif C30 opposée à celle reliée à la masse ; la source est reliée à la masse et le substrat est en l'air.

Le transistor MCA est du même type que le transistor MC mais à enrichissement. Sa grille est reliée à la même borne de l'élément capacitif C30 que celle reliée au drain du transistor MC ; le substrat et la source sont reliés à la masse et le drain est relié d'une part à la tension +VDD par l'intermédiaire d'une résistance de polarisation R40 et d'autre part à une entrée de l'unité centrale UC.

L'élément inductif-objet est réalisé en circuit imprimé double face d'épaisseur 0,8mm. Cette faible valeur conduit à optimiser le dessin d'implantation de cet élément inductif sur la carte afin de minimiser les capacités parasites entre spires dans le but d'obtenir un coefficient de surtension du circuit résonant de la carte compatible avec l'application souhaitée. Il est ainsi avantageux que la capacité parasite totale de la carte soit inférieure à 50 picofarads.

Dans le cas où l'élément inductif L30 comporte par exemple 8 spires SP, on peut envisager de l'implanter conformément au schéma de la figure 5 c'est-à-dire en réalisant successivement 4 spires d'un côté de la carte puis 4 spires de l'autre côté de la carte. Dans ce cas, il se crée entre deux spires opposées une capacité parasite élémentaire Cp et les 4 capacités parasites élémentaires sont alors sensiblement en parallèle. Par conséquent, la valeur de la capacité parasite totale est sensiblement égale à la somme de la valeur de chaque capacité parasite élémentaire.

Dans le cas d'une implantation conforme à celle représentée schématiquement sur la figure 6, chaque spire de l'élément inductif est alternativement située sur le recto et le verso de la carte C. Les capacités parasites élémentaires Cp sont alors connectées sensiblement en série ce qui induit une valeur capacitive parasite globale égale sensiblement au quart de la valeur de chaque capacité parasite élémentaire. Ce mode de réalisation est donc particulièrement avantageux et est illustré plus en détail sur la figure 7.

Sur cette figure, la partie gauche illustre le recto CR de la carte et la partie droite le verso CV. Bien entendu, on aurait pu envisager que la partie gauche illustre le verso et la partie droite le recto. Sur le recto de la carte, la référence LB1 désigne une première borne de l'élément inductif-objet. Cette borne est le point de départ d'une première spire "ouverte" SP1 qui s'arrête à un point PT12 au niveau duquel le conducteur électrique traverse la carte pour se prolonger sur le verso de celle-ci. Depuis ce point PT12, débute au verso une deuxième spire SP2 se terminant à un point de passage PT23 situé au voisinage du point PT12. Sur le recto de la carte, à partir du point PT23, le conducteur électrique se prolonge tout d'abord par une partie rectiligne destinée à "fermer" la spire SP1 puis par une autre partie entourant la spire SP1 à l'extérieur et venant se terminer à un point de passage PT34, situé au voisinage du point PT23, de façon à définir une troisième spire "ouverte" SP3. Sur le verso de la carte à partir de ce point PT34 est ménagée une quatrième spire SP4 entourant la spire SP2 et venant s'arrêter à un point de passage PT45.

Le cheminement du conducteur électrique se poursuit pour former ainsi alternativement sur le recto et sur le verso de la carte deux autres spires SP5 et SP7, et deux autres spires SP6 et SP8. A chacune de ces spires correspondent des points de passage PT56, PT67 et PT78, le point d'arrêt PT88 de la dernière spire SP8 est également un point traversant. Il constitue la deuxième borne de l'élément inductif L30 et peut être relié par un conducteur isolé, non représenté sur cette figure 7, au recto de la carte, à une partie conductrice rectiligne située à l'intérieur des spires de façon à former une deuxième borne LB2 en regard de la borne LB1.

Les autres éléments constitutifs de la carte se situent alors à l'intérieur des spires ménagées au recto de celle-ci.

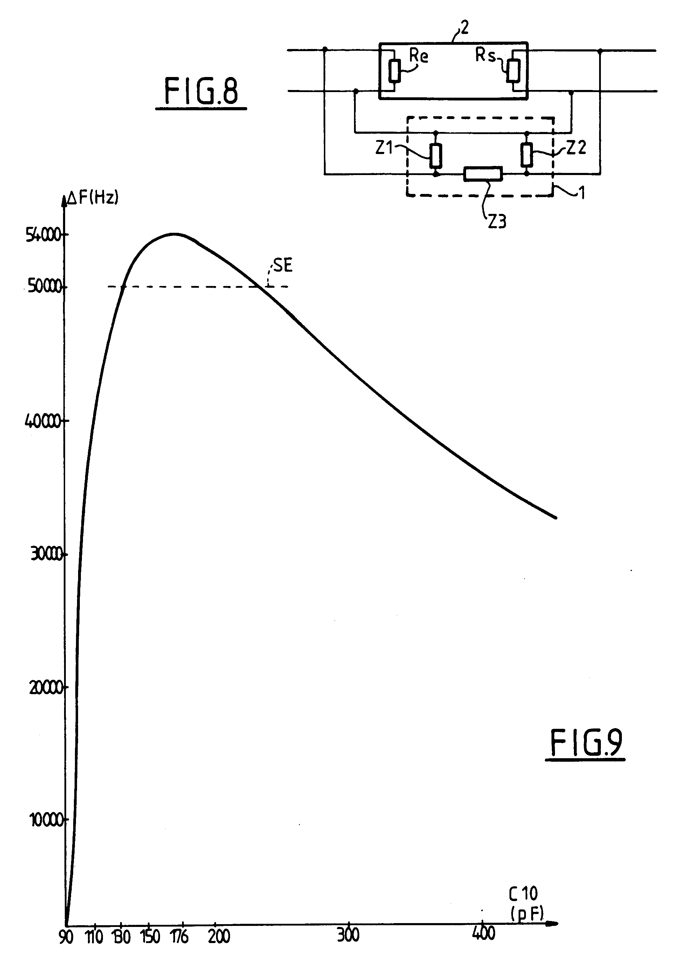

On va maintenant décrire le fonctionnement du dispositif en se référant plus particulièrement aux figures 8 et 9 et aux formules figurant en annexe et dans lesquelles le terme j désigne le nombre complexe tel que $j^2 = -1$. Dans toutes ces formules, on peut associer à chaque terme une valeur numérique. Pour des raisons de simplicité, les références de ces différents termes sont les mêmes que celles désignant les éléments du dispositif affecté de ces valeurs.

Lorsque le circuit électronique 3 est dans son état actif, c'est-à-dire lorsqu'il forme un circuit résonant accordé sur la pulsation $w_R$, la valeur résistive R10 de l'élément inductif-station se trouve augmentée de la quantité R donnée par la formule (I).

Le schéma équivalent des moyens amplificateurs 2 et de la boucle de réaction 1 du terminal est représenté sur la figure 8. Re et Rs désignent respectivement les résistances d'entrée et de sortie de ces moyens amplificateurs. Les impédances complexes Z1, Z3, Z2 sont respectivement données par les formules (II), (III), (IV).

Pour que l'oscillateur OS puisse effectivement osciller, le produit A.B (formules (V), (VI), (VII)) doit être égal à 1. On suppose également que le gain G des moyens amplificateurs est suffisant pour entretenir l'oscillation. De plus, afin que le terme résistif additionnel R puisse effectivement influer significativement sur la boucle de réaction 1, il est nécessaire que le rapport de ce terme résistif additionnel R sur la valeur résistive R10 de l'élément inductif-station (R/R10) soit suffisamment important. On choisira ici une valeur de l'ordre de 50. Dans ces conditions, on peut admettre que l'impédance Z2 de l'élément inductif-station soit donnée par la formule (VIII).

La pulsation $w_R$ est donnée en première approximation par la formule (IX). Dans cette formule, $w_O$ désigne la pulsation de repos du signal électromagnétique aux bornes de l'élément inductif-station (formule (X)), et C désigne une valeur capacitive globale égale au produit des deux éléments capacitifs-station sur leur somme (formule (XI)).

Le produit Re.Rs.C10.C11 étant très grand devant le produit L10.C (ce qui est physiquement réalisé puisqu'il y a oscillation), on peut admettre en première approximation que la pulsation $w_0$ est donnée par la formule (XII). Dans cette application on choisit une fréquence $F_0$ égale à environ 6,5 MHz.

Lorsque l'objet portatif n'est pas en couplage inductif avec le terminal, la fréquence de travail de l'oscillateur est sa fréquence de repos $F_0$.

Lorsque la carte est introduite dans le portique, il est nécessaire que le circuit résonant, bien qu'étant accordé sur la fréquence $F_R$, soit apte au couplage inductif avec la boucle de réaction de l'oscillateur, pour pouvoir faire varier la fréquence de travail de ce dernier.

Il est également avantageux que cette variation de fréquence soit la plus grande possible entre l'état inactif et l'état actif du circuit électronique 3. Il est donc avantageux que plusieurs conditions soient réalisées.

Une première condition porte sur la résistance d'entrée Re des moyens amplificateurs 2. La formule (IX) montre que, toute chose égale par ailleurs, il est avantageux de choisir une résistance d'entrée la plus faible possible, de préférence inférieure à 100 Ohms. C'est pourquoi on privilégiera un montage du transistor T20 en base commune puisque ce montage offre une plus faible résistance d'entrée qu'un montage en émetteur commun. De plus, un tel montage permet d'obtenir une plus grande stabilité en température.

Une autre condition porte sur le produit C10.C11 des deux valeurs des deux éléments capacitifs-station. Il faut que ce produit soit le plus faible possible pour que la variation de fréquence soit la plus grande possible à l'introduction de la carte, toute chose étant égale par ailleurs. Or, une fois que la pulsation $w_0$ a été choisie, la valeur capacitive globale C est fixée. Dans ce cas, compte tenu de la formule (XI), le produit C10.C11 est minimum lorsque les deux valeurs C10 et C11 sont égales toutes les deux à deux fois la valeur capacitive globale.

On retrouve ce résultat sur la courbe expérimentale de la figure 9. Celle-ci illustre l'évolution de la variation de fréquence DF donnée par la formule (XIII) dans laquelle $w_R - w_0$ est donné en première approximation par la formule (XIV) déduite de la formule (IX) en substituant la valeur C11 par celle de la formule (XV).

On remarque, sur cette courbe, que la variation DF est maximale pour une valeur C10 égale à 176 picofarads ce qui correspond bien à deux fois la valeur capacitive globale (88 picofarads).

Cette courbe expérimentale, très proche de la courbe théorique, permet d'effectuer le réglage de l'accord du circuit résonant. En effet, après avoir placé la carte au centre du portique (cas le plus défavorable) on ajuste la valeur de l'élément capacitif-objet C30 jusqu'à obtenir la fréquence maximale, qui constitue alors la fréquence d'accord du circuit résonant. Cette valeur C30 est ici de l'ordre de 88 picofarads et la fréquence d'accord de l'ordre de 6,554 MHz. La variation de fréquence (54 KHz) se situe effectivement au-dessus du seuil SE.

Il convient de noter ici que la variation de fréquence va en augmentant jusqu'à atteindre une valeur de 132 KHz lorsque la carte est placée à 5cm des montants. On montre alors, que bien qu'étant accordé sur la fréquence de 6,554 MHz, le circuit résonant reste apte au couplage inductif avec la boucle de réaction même à une fréquence de travail de 6,632 MHz ($F_0$ + 132KHz).

D'une façon générale, les informations à transmettre depuis la carte jusqu'au terminal sont stockées dans les moyens de stockage MSD sous la forme de données binaires 0 ou 1. Lors d'une transmission de telles informations, les moyens de traitement-objet MTO commandent le transistor à effet de champ pour faire passer le circuit électronique 3 dans son état actif ou inactif suivant la valeur de la donnée binaire. La fréquence de travail de l'oscillateur passe donc de sa valeur de repos $F_0$ à sa valeur $F_R$ et inversement selon la donnée binaire transmise. Les moyens de traitements-station analysent ces différentes variations et en déduisent l'information transmise.

La transmission d'informations dans le sens terminal carte se réalise simplement par l'application ou la non application d'une tension aux bornes de l'élément inductif-objet L30. Pour cela, il est nécessaire que le circuit électronique 3 soit dans son état actif c'est-à-dire formant un circuit résonant. De la même façon, les informations transmises depuis le terminal vers la carte le sont sous la forme d'une suite de données binaires 0 ou 1. Selon la valeur de la donnée binaire à transmettre, les moyens de traitement-station appliquent ou non une tension aux bornes de l'élément inductif-station L10. Par conséquent, il s'induit ou non une tension aux bornes de l'élément inductif-objet L30. En l'absence de tension aux bornes de l'élément L30, le transistor à effet de champ autorise l'application d'un état haut sur l'entrée des moyens de traitement-objet MTO (entrée reliée à la tension +VDD). En présence d'une tension aux bornes de l'élément L30, le transistor à effet de champ MCA relie cette entrée des moyens de traitement-objet à la masse (état bas).

On voit donc, que le transistor à effet de champ MCA est commandé par le circuit résonant et qu'il fait partie, au même titre que ce circuit résonant, de moyens de réception de données transmises depuis le terminal. Ces moyens de réception sont donc commutables entre un état de travail dans lequel ils sont couplés inductivement avec la boucle de réaction de l'oscillateur (tension aux bornes de l'élément L30 et entrée des moyens de traitement-objet reliée à la masse) et un état de repos (circuit résonant non couplé inductivement avec le terminal et entrée des moyens de traitement-objet reliée à la tension +VDD).

Bien entendu, dans cette application, les moyens de traitement-objet MTO forment des moyens d'analyse de ces informations reçues et celles-ci sont stockées alors sous forme de données binaires dans les moyens de stockage MSD. On aurait pu cependant concevoir que ces moyens d'analyse soient différents des moyens de traitement-objet et que la carte comprenne ces moyens de mémorisation des données reçues distincts des moyens de stockage des données à transmettre.

Lorsque la carte n'est pas en couplage inductif avec le portique, le circuit électronique 3 est dans son état actif formant un circuit résonant susceptible d'être accordé sur la fréquence de travail de l'oscillateur du terminal. Les moyens de réception sont dans leur état de repos, reliant l'entrée des moyens de traitement-objet à la tension +VDD. Lorsque le porteur de la carte pénètre dans le portique, les moyens de réception passent dans leur état de travail, reliant l'entrée des moyens de traitement-objet à la masse. En réponse à cette transition, la carte émet des informations vers le terminal, par exemple son numéro d'identification. Durant cette transmission, le circuit électronique 3 passe soit dans son état actif soit dans son état inactif en fonction des données binaires transmises, et les moyens de traitement-objet inhibent leur entrée, afin de ne pas tenir compte de la position de l'interrupteur MCA.

Lorsque toutes les données utiles ont été transmises, s'il est nécessaire que le terminal transmette des informations vers l'objet portatif, le circuit électronique 3 restera dans son état actif durant toute cette transmission et les moyens de réception passeront de leur état de repos à leur état de travail et inversement en fonction des informations binaires reçues du terminal.

Il convient donc de remarquer ici que les moyens d'alimentation de la carte MAO ne servent qu'à alimenter les moyens de traitement-objet ainsi qu'à polariser le transistor à effet de champ MCA. Aucune énergie n'est nécessaire pour l'échange proprement dit des données aussi bien dans le cas d'une transmission de la carte vers le terminal que l'inverse. Ainsi, cette faible consommation, autorise une grande autonomie électrique de la carte.

L'invention n'est pas limitée au mode de réalisation ci-dessus décrit mais embrasse notamment les suivantes :

- il n'est pas exclu que dans certains cas de transmission dans le sens carte-terminal les différents éléments de la carte puissent être alimentés à partir de l'énergie présente aux bornes de l'élément inductif-objet,
- l'élément inductif-station peut être de taille réduite, notamment dans le cas d'un contrôle d'accès à un terminal d'ordinateur ; en effet on pourrait concevoir qu'un utilisateur potentiel pose sa carte ou son badge équipé sur un support inductif afin que le terminal puisse "lire" le numéro d'identification du badge pour autoriser l'accès. Cette application éviterait ainsi à l'utilisateur de taper un mot de passe à l'écran du terminal. L'homme de l'art désigne alors habituellement ce genre de carte sous la dénomination "carte de proximité".

Bien entendu certains des moyens décrits ci-dessus peuvent être omis dans les variantes où ils ne servent pas. Ce peut être notamment le cas des moyens de réception dans le cas d'un badge utilisé seulement pour le contrôle d'accès à un bâtiment. En effet, il n'y aurait alors qu'une émission d'un numéro d'identification vers le terminal.

ANNEXE

$$(I) \qquad R = \frac{M^2 . w_R^2}{R30}$$

$$(II) \qquad Z1 = - \frac{j}{C10 . w_R}$$

$$(III) \qquad Z3 = - \frac{j}{C11 . w_R}$$

$$(IV) \qquad Z2 = R10 + R + j . L10 . w$$

$$(V) \qquad A = \frac{- G}{\dfrac{1}{Z2} + \dfrac{1}{Z1' + Z3} + \dfrac{1}{Rs}}$$

$$(VI) \qquad Z1' = \frac{Z1 . Re}{Re + Z1}$$

$$(VII) \qquad B = \frac{Z1'}{Z1' + Z3}$$

$$(VIII) \qquad Z2 = R + j . L10 . w_R$$

$$(IX) \qquad w_R = \left( w_O^2 + \frac{R^4 - \left(\dfrac{L10}{C}\right) . R^2 + \left(\dfrac{L10^2}{Re . C10 . C11}\right) . R}{L10^4 . w_O^2 - L10^2 . R^2} \right)^{1/2}$$

$$(X) \qquad w_O = \left( \frac{1}{Re.Rs.C10.C11} + \frac{1}{L10.C} \right)^{\frac{1}{2}}$$

$$(XI) \qquad C = \frac{C10.C11}{C10 + C11}$$

$$(XII) \qquad w_O = \left( \frac{1}{L10.C} \right)^{1/2}$$

$$(XIII) \qquad DF = \frac{w_R - w_O}{2\pi}$$

$$(XIV) \qquad w_R - w_O = \frac{R^4 - \left( \frac{L10}{C} \right).R^2 + \frac{L10^2 (C10-C).R}{Re.C10^2.C}}{2.\left( L10^4.w_O^2 - L10^2.R^2 \right)} \cdot \left( \frac{1}{\frac{C10-C}{Re.Rs.C10^2.C} + \frac{1}{L10.C}} \right)^{\frac{1}{2}}$$

$$(XV) \qquad C11 = \frac{C10.C}{C10-C}$$

## Revendications

**1.** Dispositif pour l'échange d'informations à distance entre un objet portatif et une station, caractérisé en ce qu'il comprend :

- sur la station (S),
  . un oscillateur (OS) comprenant des moyens amplificateurs (2) et une boucle de réaction à circuit oscillant (1), possédant deux éléments capacitifs-station (C10, C11) et un élément inductif-station (L10), et susceptible de lui conférer une fréquence de travail variable relativement à une fréquence de repos, ainsi que
  . des moyens de traitement-station (MTS), reliés à l'oscillateur, et capables de traiter les variations de la fréquence de travail,
- sur l'objet portatif (C),
  . un circuit électronique (3) commutable entre un état inactif et un état actif dans lequel il forme un circuit résonant accordé sur une fréquence distincte de ladite fréquence de repos, tout en demeurant apte au couplage inductif avec la boucle de réaction (1) à ladite fréquence de repos, et
  . des moyens de traitement-objet (MTO), capables de commuter le circuit électronique (3) en fonction d'informations à transmettre vers la station,

la variation de la fréquence de travail de l'oscillateur, ainsi induite par ces commutations, permettant aux moyens de traitement-station d'en déduire lesdites informations et les éléments du circuit électronique et ceux de la boucle de réaction étant choisis et agencés pour que la variation de fréquence induite par le circuit résonant soit supérieure à un seuil prédéterminé (SE).

**2.** Dispositif selon la revendication 1, caractérisé en ce que la résistance d'entrée des moyens amplificateurs (2) est faible.

**3.** Dispositif selon l'une des revendications 1 à 2, caractérisé, en ce que l'oscillateur est du type dit de "Colpits aménagé".

**4.** Dispositif selon la revendication 3, caractérisé en ce que la pulsation de travail de l'oscillateur est sensiblement égale à l'inverse de la racine carrée du produit de la valeur de l'élément inductif-station et d'une valeur capacitive globale sensiblement égale au rapport du produit des valeurs des deux éléments capacitifs-station sur leur somme,
et en ce que les valeurs respectives des deux éléments capacitifs-station sont choisies pour maximiser la variation de fréquence induite dans l'oscillateur par la commutation du circuit électronique.

**5.** Dispositif selon la revendication 4, caractérisé en ce que les valeurs des deux éléments capacitifs-station sont sensiblement égales au double de ladite valeur capacitive globale.

**6.** Dispositif selon l'une des revendications 3 à 5, caractérisé en ce que les moyens amplificateurs (2) de l'oscillateur comprennent un transistor (T20) monté en base commune.

**7.** Dispositif selon l'une des revendications 3 à 5, caractérisé en ce que les moyens amplificateurs (2) de l'oscillateur comprennent un transistor (T20) monté en émetteur commun.

**8.** Dispositif selon l'une des revendications précédentes, caractérisé en ce que le circuit électronique de l'objet portatif comporte un élément inductif-objet (L30) et un élément capacitif-objet (C30) reliés l'un à l'autre dans ledit état actif pour former le circuit résonant ainsi que des moyens de commutation (MC) reliés à l'un et/ou à l'autre des deux éléments et susceptibles de commuter le circuit électronique entre ses deux états.

**9.** Dispositif selon la revendication 8, caractérisé en ce que l'élément inductif-station et l'élément inductif-objet possèdent chacun une valeur résistive,
en ce que, dans l'état actif du circuit électronique, le circuit résonant induit dans la boucle de réaction un terme résistif additionnel (R) dépendant du coefficient de mutuelle induction entre l'élément inductif-station et l'élément inductif-objet ainsi que de la valeur résistive de l'élément inductif-objet,
et en ce que le rapport de la valeur du terme résistif additionnel sur la valeur résistive de l'élément inductif-station est supérieur à une valeur choisie.

**10.** Dispositif selon la revendication 9, caractérisé en ce que ladite valeur choisie est de l'ordre de 50.

**11.** Dispositif selon l'une des revendications précédentes, caractérisé en ce que l'élément inductif-objet (L30) est agencé pour conférer une faible capacité parasite au circuit résonant.

**12.** Dispositif selon la revendication 11, caractérisé en ce que l'objet portatif est du type carte ou analogue, et en ce que l'élément inductif-objet comprend un conducteur électrique traversant la carte pour former une succession de spires (SP) alternativement situées sur le recto et le verso de la carte.

**13.** Dispositif selon l'une des revendications 8 à 12, caractérisé en ce que les moyens de commutation (MC) comprennent un transistor à effet de champ.

**14.** Dispositif selon l'une des revendications précédentes, caractérisé en ce qu'il comprend, sur l'objet portatif, des moyens de stockage (MSD) des informations à transmettre.

**15.** Dispositif selon l'une des revendications précédentes, caractérisé en ce que l'objet portatif comprend des moyens d'alimentation électrique (MAO).

**16.** Dispositif selon l'une des revendications précédentes prise en combinaison avec la revendication 15, caractérisé en ce qu'il comprend en outre, sur l'objet portatif, des moyens de réception (3,MCA) d'informations transmises depuis la station vers l'objet portatif, commutables en fonction de ces informations transmises entre un état de travail dans lequel ils sont couplés inductivement avec la boucle de réaction de l'oscillateur, et un état de repos,
- des moyens d'analyse (MTO) déduisant de ces commutations lesdites informations transmises.

**17.** Dispositif selon la revendication 16, caractérisé en ce que les moyens de réception comprennent ledit circuit résonant (3) et des moyens de commutation additionnels (MCA), commandés par le circuit résonant pour délivrer aux moyens d'analyse (MTO) une donnée binaire en fonction de l'état dans lequel se trouvent les moyens de réception.

**18.** Dispositif selon la revendication 17, caractérisé en ce que les moyens de commutation additionnels (MCA) comprennent un transistor à effet de champ.

**19.** Dispositif selon l'une des revendications 16 à 18, caractérisé en ce qu'il comprend, sur l'objet portatif, des moyens de mémorisation (MSD) des informations reçues.

**20.** Dispositif selon l'une des revendications 16 à 19, caractérisé en ce que les moyens d'analyse sont les moyens de traitement-objet (MTO).

**21.** Dispositif selon l'une des revendications 19 à 20, prise en combinaison avec la revendication 17, caractérisé en ce que les moyens de mémorisation sont les moyens de stockage (MSD).

**22.** Dispositif selon l'une des revendications précédentes, caractérisé en ce que la station comprend un portique inductif formant l'élément inductif-station.

**23.** Dispositif selon l'une des revendications précédentes, caractérisé en ce que l'objet portatif est du type carte, badge ou analogue.

**24.** Dispositif selon la revendication 20, caractérisé en ce que l'objet portatif est du type "carte à mémoire".

**25.** Station pour être couplée inductivement avec un objet portatif pour l'échange d'informations à distance, caractérisée en ce qu'elle comprend :
- un oscillateur comprenant des moyens amplificateurs (2) et une boucle de réaction à circuit oscillant (1), possédant deux éléments capacitifs-station (C10, C11) et un élément inductif-station (L10), et susceptible de lui conférer une fréquence de travail variable relativement à une fréquence de repos, ainsi que
- des moyens de traitement-station (MTS), reliés à l'oscillateur, et capable de traiter les variations de la fréquence de travail, ledit oscillateur possédant des caractéristiques telles que, lorsque l'objet portatif commence à être couplé inductivement à l'élément inductif-station, des variations se produisent dans la fréquence de travail de l'oscillateur susceptibles d'être traitées par les moyens de traitement-station (MTS).

**26.** Objet portatif pour être couplé inductivement à une station pour l'échange d'informations à distance, caractérisé en ce qu'il comprend :
- un circuit électronique (3) commutable entre un état inactif et un état actif dans lequel il forme un circuit résonant accordé sur une fréquence distincte de la fréquence de repos d'un oscillateur de ladite station comprenant des moyens d'amplification et une boucle de réaction à circuit oscillant, tout en demeurant apte au couplage inductif avec la station ;
- des moyens de traitement-objet (MTO), capables de commuter le circuit électronique (3) en fonction d'informations à transmettre vers la station,
les éléments du circuit électronique étant choisis et agencés de façon à ce que, lorsque le circuit électronique est commuté dans son état actif et l'objet portatif est inductivement couplé à la station, des variations de la fréquence de travail de l'oscillateur de la station sont produites pour transmettre des informations entre l'objet et la station et à ce que la variation de fréquence induite par le circuit résonant soit supérieure à un seuil prédéterminé (SE).

**Claims**

1.  A device for remote information interchange between a portable object and a station, characterised in that it comprises:
    - at the station (S),
        . an oscillator (OS) comprising amplifier means (2) and an oscillating circuit feedback loop (1), having two station capacitor elements (C10, C11) and a station inductor element (L10), and suitable for conferring a working frequency thereto which is variable relative to a rest frequency; and also
        . station processor means (MTS) connected to the oscillator and capable of processing variations in the working frequency,
    - at the portable object (C),
        . an electronic circuit (3) which is switchable between an inactive state and an active state in which it constitutes a resonant circuit tuned to a frequency different from said rest frequency while remaining suitable for inductive coupling with the feedback loop (1) at said rest frequency, and
        . object processor means (MTO) capable of switching the electronic circuit (3) as a function of the information to be transmitted to the station,
    the variation of the working frequency of the oscillator thus induced by such switching enabling the station processor means to deduce said information and the elements of the electronic circuit and those of the feedback loop being selected and arranged so that the frequency variation induced by the resonant circuit is greater than a predetermined threshold (SE).

2.  A device according to claim 1, characterised in that the input resistance of the amplifier means (2) is low.

3.  A device according to claim 1 or 2, characterised in that the oscillator is of the "adapted Colpits" type.

4.  A device according to claim 3, characterised in that the working pulsation of the oscillator is substantially equal to the reciprocal of the square root of the product of the value of the station inductor element and an overall capacitance value which is substantially equal to the ratio of the product of the values of the two station capacitor elements divided by the sum of said capacitances, and in that the respective values of the two station capacitor elements are selected so as to maximize the frequency variation induced in the oscillator by the switching of the electronic circuit.

5.  A device according to claim 4, characterised in that the values of the two station capacitor elements are substantially equal to twice said overall capacitance value.

6.  A device according to any one of claims 3 to 5, characterised in that the amplifier means (2) of the oscillator comprise a common base connected transistor (T20).

7.  A device according to any one of claims 3 to 5, characterised in that the amplifier means (2) of the oscillator comprise a common emitter connected transistor (T20).

8.  A device according to any preceding claim, characterised in that the electronic circuit of the portable object includes an object inductor element (L30) and an object capacitor element (C30) connected to each other in said active state to form the resonant circuit, together with switching means (MC) connected to one and/or other of the two elements and suitable for switching the electronic circuit between its two states.

9.  A device according to claim 8, characterised in that the station inductor element and the object inductor element each possesses a resistive value, in that, in the active state of the electronic circuit, the resonant circuit induces an additional resistive term (R) in the feedback loop dependant on the mutual induction coefficient between the station inductor element and the object inductor element, and also on the resistance of the object inductor element, and in that the ratio of the value of the additional resistance term divided by the resistive value of the station inductor element is greater than a selected value.

10. A device according to claim 9, characterised in that said selected value is about 50.

11. A device according to any preceding claim, characterised in that the object inductor element (L30) is arranged to impart little stray capacitance to the resonant circuit.

12. A device according to claim 11, characterised in that the portable object is a card or like object, and in that the object inductor element comprises an electrical conductor that passes through the card in order to form a succession of turns (SP) alternately situated on the front face and on the rear face of the card.

13. A device according to any one of claims 8 to 12, characterised in that the switching mneans (MC) comprise a field effect transistor.

14. A device according to any preceding claim, characterised in that it includes, on the portable object, storage means (MSD) for storing the information to be transmitted.

15. A device according to any preceding claim, characterised in that the portable object includes electrical power supply means (MAO).

16. A device according to any preceding claim in combination with claim 15, characterised in that it further includes, on the portable object, reception means (3,MCA) for receiving information transmitted from the station to the portable object, said means being switchable as a function of said transmitted information between a working state in which they are inductively coupled with the feedback loop of the oscillator, and a rest state,
    - analysis means (MTO) deducing the transmitted information from said switching.

17. A device according to claim 16, characterised in that the reception means comprise said resonant circuit (3) and additional switching means (MCA) controlled by the resonant circuit to deliver binary digits to the analysis means (MTO) as a function of the state in which the reception means are to be found.

18. A device according to claim 17, characterised in that the additional switching mneans (MCA) comprise a field effect transistor.

19. A device according to any one of claims 16 to 18, characterised in that it includes, on the portable object, means (MSD) for memorising received information.

20. A device according to any one of claims 16 to 19, characterised in that the analysis means are constituted by the object processor means (MTO).

21. A device according to one of claims 19 to 20, in combination with claim 17, characterised in that the memorisation means are the storage means (MSD).

22. A device according to any preceding claim, characterised in that the station includes an inductive gate forming the station inductor element.

23. A system according to any preceding claim, characterised in that the portable object is of the card, badge, or similar type.

24. A device according to claim 20, characterised in that the portable object is of the memory card type.

25. A station for inductive coupling with a portable object for the remote exchange of information, characterised in that it comprises :
    - an oscillator comprising amplifier means (2) and an oscillating circuit feedback loop (1), having two station capacitor elements (C10, C11) and a station inductor element (L10), and capable of conferring thereto a working frequency variable relatively to a rest frequency, as well as
    - station processor means (MTS), connected to the oscillator and capable of processing the variations of the working frequency, the said oscillator having characteristics such that, when the portable object is inductively coupled to the station inductor element, the variations produced in the working frequency of the oscillator are capable of being processed by the station processor means (MTS).

26. A portable object for inductive coupling to a station for the remote exchange of information, characterised in that it comprises :
- an electronic circuit (3) switchable between an inactive and an active state in which it constitutes a resonant circuit tuned to a frequency different from the rest frequency of an oscillator of the said station comprising an oscillating circuit feedback loop, while remaining suitable for inductive coupling with the station;
- object processor means (MTO), capable of switching the electronic circuit (3) as a function of information to be transmitted to the station,

the elements of the electronic circuit being selected and arranged so that when the electronic circuit is switched into its active state and the portable object is inductively coupled with the station, variations of the working frequency of the oscillator of the station are produced in order to transmit information between the object and the station and that the variation of the frequency induced by the resonant circuit is greater than a predetermined threshold (SE).

**Patentansprüche**

1. Einrichtung zum Fernaustausch von Informationen zwischen einem tragbaren Objekt und einer Station, dadurch gekennzeichnet, daß sie umfaßt:

an der Station (S)
- einen Oszillator (OS) umfassend eine Verstärkereinrichtung (2) und eine Schwingkreis-Rückkopplungsschleife (1), die zwei stationsseitige kapazitive Elemente (C10, C11) und ein stationsseitiges induktives Element (L10) umfaßt und ihm eine relativ zu einer Ruhefrequenz veränderliche Arbeitsfrequenz verleihen kann, sowie eine
- stationsseitige Verarbeitungseinrichtung (MTS), die mit dem Oszillator verbunden ist und welche die Änderungen der Arbeitsfrequenz verarbeiten kann,

an dem tragbaren Objekt
- eine elektronische Schaltung (3), die umschaltbar ist zwischen einem inaktiven und einem aktiven Zustand, in dem sie einen Resonanzkeis bildet, der auf eine von der Ruhefrequenz verschiedene Frequenz abgestimmt ist, dabei aber für die induktive Kopplung mit der Rückkopplungsschleife (1) bei der Ruhefrequenz bereit bleibt, und
- eine objektseitige Verarbeitungseinrichtung (MTO), welche die elektronische Schaltung (3) in Abhängigkeit von zur Station zu übertragenden Informationen umschalten kann,

wobei die Änderung der Arbeitsfrequenz des Oszillators, die so durch diese Umschaltungen induziert wird, es der stationsseitigen Verarbeitungseinrichtung erlaubt, daraus die genannten Informationen abzuleiten, und wobei die Elemente der elektronischen Schaltung und die der Rückkopplungsschleife so ausgewählt und ausgebildet sind, daß die Änderung der Frequenz, die durch den Resonanzkreis induziert wird, größer als ein vorbestimmter Schwellwert (SE) ist.

2. Einrichtung nach Anspruch 1, dadurch **gekennzeichnet,** daß der Eingangswiderstand der Verstärkereinrichtung (2) niedrig ist.

3. Einrichtung nach Anspruch 1 oder 2, dadurch **gekennzeichnet,** daß der Oszillator ein verstärkter "Colpitts"-Oszillator ist.

4. Einrichtung nach Anspruch 3, dadurch **gekennzeichnet,** daß die Arbeitsfrequenz des Oszillators im wesentlichen gleich dem Kehrwert der Quadratwurzel des Produktes aus dem Wert des stationsseitigen induktiven Elementes und einem globalen Kapazitätswert ist, welcher im wesentlichen gleich dem Verhältnis des Produktes der Werte der beiden stationsseitigen kapazitiven Elemente zu ihrer Summe ist,
und daß die jeweiligen Werte der beiden stationsseitigen kapazitiven Elemente im Sinne einer Maximierung der durch die Umschaltung der elektronischen Schaltung in dem Oszillator induzierten Frequenzänderung gewählt sind.

**5.** Einrichtung nach Anspruch 4, dadurch **gekennzeichnet,** daß die Werte der beiden stationsseitigen kapazitiven Elemente im wesentlichen gleich dem Doppelten des genannten globalen Kapazitätswertes sind.

**6.** Einrichtung nach einem der Ansprüche 3 bis 5, dadurch **gekennzeichnet**, daß die Verstärkereinrichtung (2) des Oszillators einen Transistor (T20) umfaßt, der in Vorwärtsbasisschaltung geschaltet ist.

**7.** Einrichtung nach einem der Ansprüche 3 bis 5, dadurch **gekennzeichnet,** daß die Verstärkereinrichtung (2) des Oszillators einen Transistor (T20) umfaßt, der in Emitterschaltung geschaltet ist.

**8.** Einrichtung nach einem der vorhergehenden Ansprüche, dadurch **gekennzeichnet,** daß die elektronische Schaltung des tragbaren Objektes ein objektseitiges induktives Element (L30) und ein objektseitiges kapazitives Element (C30), die im aktiven Zustand zur Bildung des Resonanzkreises miteinander verbunden sind, sowie eine Umschalteinrichtung (MC) umfaßt, welche mit dem einen und/oder dem anderen der beiden Elemente verbunden ist und die elektronische Schaltung zwischen ihren beiden Zuständen umschalten kann.

**9.** Einrichtung nach Anspruch 8, dadurch **gekennzeichnet,** daß das stationsseitige induktive Element und das objektseitige induktive Element jeweils einen spezifischen Widerstandswert haben,
daß im aktiven Zustand der elektronischen Schaltung der Resonanzkreis in der Rückkopplungsschleife einen zusätzlichen Widerstandsterm (R) induziert, der von dem Koeffizient der wechselseitigen Induktion zwischen dem stationsseitigen induktiven Element und dem objektseitigen induktiven Element sowie von dem Widerstandswert des objektseitigen induktiven Elementes abhängt,
und daß das Verhältnis des Wertes des zusätzlichen Widerstandsterms zu dem Widerstandswert des stationsseitigen induktiven Elementes über einem vorgewählten Wert liegt.

**10.** Einrichtung nach Anspruch 9, dadurch **gekennzeichnet,** daß der vorgewählte Wert in der Größenordnung von 50 liegt.

**11.** Einrichtung nach einem der vorhergehenden Ansprüche, dadurch **gekennzeichnet,** daß das objektseitige induktive Element (L30) ausgebildet ist, um dem Resonanzkreis eine schwache parasitäre Kapazität zu verleihen.

**12.** Einrichtung nach Anspruch 11, dadurch **gekennzeichnet,** daß das tragbare Objekt eine Karte oder dergleichen ist,
und daß das objektseitige induktive Element einen elektrischen Leiter umfaßt, der sich über die Karte erstreckt, um eine Folge von Windungen (SP) zu bilden,
die in alternierender Folge auf der Vorderseite und der Rückseite der Karte liegen.

**13.** Einrichtung nach einem der Ansprüche 8 bis 12, dadurch **gekennzeichnet,** daß die Umschalteinrichtung (MC) einen Feldefekttransistor umfaßt.

**14.** Einrichtung nach einem der vorhergehenden Ansprüche, dadurch **gekennzeichnet,** daß sie auf dem tragbaren Objekt Speichermittel (MSD) zur Speicherung der übertragenden Informationen hat.

**15.** Einrichtung nach einem der vorhergehenden Ansprüche, dadurch **gekennzeichnet,** daß das tragbare Objekt eine elektrische Versorgungseinrichtung (MAO) umfaßt.

**16.** Einrichtung nach einem der vorhergehenden Ansprüche in Verbindung mit dem Anspruch 15, dadurch **gekennzeichnet,** daß sie ferner an dem tragbaren Objekt eine Empfangseinrichtung (3,MCA) für von der Station zu dem tragbaren Objekt übertragene Informationen umfaßt, die in Abhängigkeit dieser übertragenen Informationen zwischen einem Ruhezustand und einem Arbeitszustand umschaltbar ist, in welchem sie induktiv mit der Rückkopplungsschleife des Oszillator gekoppelt ist,
und daß sie ferner eine Analysiereinrichtung (MTO) umfaßt, welche aus diesen Umschaltungen die genannten übertragenen Informationen ableitet.

**17.** Einrichtung nach Anspruch 16, dadurch **gekennzeichnet,** daß die Empfangseinrichtung den genannten Resonanzkreis (3) und eine zusätzliche Umschalteinrichtung (MCA) umfaßt, welche durch den Resonanzkreis gesteuert wird, um an die Analysiereinrichtung (MTO) binäre Daten in Abhängigkeit des Zustandes abzugeben, in dem sich die Empfangseinrichtung befindet.

18. Einrichtung nach Anspruch 17, dadurch **gekennzeichnet,** daß die zusätzliche Umschalteinrichtung (MCA) einen Feldefekttransistor umfaßt.

19. Einrichtung nach einem der Ansprüche 16 bis 18, dadurch **gekennzeichnet,** daß sie auf dem tragbaren Objekt eine Speichereinrichtung (MSD) zur Speicherung empfangener Informationen hat.

20. Einrichtung nach einem der Ansprüche 16 bis 19, dadurch gekennzeichnet, daß die Analysiereinrichtung die objektseitige Verarbeitungseinrichtung (MTO) ist.

21. Einrichtung nach Anspruch 19 oder 20 in Verbindung mit dem Anspruch 17, dadurch **gekennzeichnet,** daß die Speichereinrichtung für die empfangenen Informationen die Speichereinrichtung (MSD) für die zu übertragenden Informationen ist.

22. Einrichtung nach einem der vorhergehenden Ansprüche, dadurch **gekennzeichnet,** daß die Station ein induktives Tor umfaßt, welches das stationsseitige induktive Element bildet.

23. Einrichtung nach einem der vorhergehenden Ansprüche, dadurch **gekennzeichnet,** daß das tragbare Objekt eine Karte, ein Ansteckzeichen oder dergleichen ist.

24. Einrichtung nach Anspruch 20, dadurch **gekennzeichnet,** daß das tragbare Objekt eine Speicherkarte ist.

25. Station, welche mit einem tragbaren Objekt zum Fernaustausch von Informationen induktiv koppelbar ist, **gekennzeichnet** durch :
einen Oszillator mit einer Verstärkereinrichtung (2) und einer Schwingkreis-Rückkopplungsschleife (1), welche zwei stationsseitige kapazitive Elemente (C10, C11) und ein stationsseitiges induktives Element (L10) umfaßt und ihm eine relativ zu einer Ruhefrequenz veränderliche Arbeitsfrequenz verleihen kann, sowie
eine stationsseitige Verarbeitungseinrichtung (MTS), die mit dem Oszillator verbunden ist und die Änderungen der Arbeitsfrequenz verarbeiten kann, wobei der Oszillator Eigenschaften besitzt derart, daß bei Beginn einer induktiven Kopplung des tragbaren Objektes mit dem stationsseitigen induktiven Element die in der Arbeitsfrequenz des Oszillators auftretenden Änderungen durch die stationsseitige Verarbeitungseinrichtung (MTS) verarbeitet werden können.

26. Tragbares Objekt, das zum Fernaustausch von Informationen induktiv mit einer Station koppelbar ist, **gekennzeichnet** durch
eine elektronische Schaltung (3), die zwischen einem inaktiven Zustand und einem aktiven Zustand umschaltbar ist, in dem sie einen Resonanzkreis bildet, der auf eine von der Ruhefrequenz eines Oszillators der genannten Station verschiedene Frequenz abgestimmt ist und dabei zur induktiven Kopplung mit der Station bereit bleibt, wobei der Oszillator eine Verstärkereinrichtung und eine Schwingkreis-Rückkopplungsschleife umfaßt;
eine objektseitige Verarbeitungseinrichtung (MTO), welche die elektronische Schaltung (3) in Abhängigkeit der zur Station zu übertragenden Informationen umschalten kann,
wobei die Elemente der elektronischen Schaltung so ausgewählt und ausgebildet sind, daß beim Umschalten der elektronischen Schaltung in ihren aktiven Zustand und bei induktiver Kopplung des tragbaren Objektes mit der Station Änderungen der Arbeitsfrequenz des Oszillators der Station erzeugt werden, um Informationen zwischen dem Objekt und der Station zu übertragen, und daß die durch den Resonanzkreis induzierte Änderung der Frequenz über einem vorgegebenen Schwellwert (SE) liegt.

17

FIG.1

FIG.2

FIG.3

FIG.4

FIG.5

FIG.6

FIG.7

FIG.8

FIG.9